# EUROPÄISCHE PATENTANMELDUNG

(11) **EP 2 682 614 A1**
(43) Veröffentlichungstag der Anmeldung: **08.01.2014**
(21) Anmeldenummer: 13175234.7
(22) Anmeldetag: 05.07.2013
(51) Int. Cl.: F16B 12/24, F16B 12/26

(54) **Verbindungsanordnung**

(30) Priorität: 05.07.2012 DE 202012102484 U
(71) Anmelder: REHAU AG + Co, 95111 Rehau (DE); REHAU Ltd., Ross-on Wye, Herefordshire HR9 5QN (GB)
(72) Erfinder: Schlegl, Kai, 95111 Rehau (DE); Badham, Gary, Little Mill (GB); Bloss, Jürgen, Hereford HR4 0DY (GB)

(57) **Zusammenfassung**

Die Erfindung betrifft eine Verbindungsanordnung (1) zum Verbinden von wenigstens zwei zueinander angeordneten Möbelbauplatten (2, 3), insbesondere für Schrank- oder Regalmöbel und dergleichen, umfassend wenigstens eine Rastanordnung (4) sowie wenigstens ein Verbindungsmittel (5), mit wenigstens einem ersten Rastelement (41, 51), wobei die Möbelbauplatte (2, 3) wenigstens eine Ausnehmung (20, 30) aufweist und sich dadurch auszeichnet, dass das Verbindungsmittel (5) in wenigstens einer Ausnehmung (20, 30) der Möbelbauplatte (2, 3) angeordnet ist, wenigstens einen Aufnahmeraum (50), in dem ein erstes Rastelement (51) angeordnet ist, aufweist und das die Rastanordnung (4) bei miteinander verbundenen Möbelbauplatten (2, 3) mit dem Aufnahmeraum (50) des Verbindungsmittels (5) in Wirkverbindung steht.

## Beschreibung

Die Erfindung betrifft eine Verbindungsanordnung zum Verbinden von wenigstens zwei zueinander angeordneten Möbelbauplatten, insbesondere für Schrank- oder Regalmöbel und dergleichen, umfassend wenigstens eine Rastanordnung sowie wenigstens ein Verbindungsmittel, mit wenigstens einem ersten Rastelement, wobei die Möbelbauplatte wenigstens eine Ausnehmung aufweist.

Derartige Verbindungsanordnungen insbesondere für Schrank- oder Regalmöbel sind aus dem Stand der Technik bereits umfangreich bekannt.
Insbesondere bei der industriellen Herstellung von Möbelbauplatten bzw. Schrank- oder Regalmöbeln ist eine Vielzahl von Verbindungsanordnungen bekannt.

Weit verbreitet sind in diesem Zusammenhang sogenannte Exzenter-Beschläge, die im Allgemeinen einen in einem Möbelteil angeordneten Zapfen aufweisen, der mit einem drehbaren Exzenter-Beschlag im zweiten Möbelteil in Eingriff bringbar ist.

Ein derartiger Exzenter-Beschlag ist beispielsweise in der DE 1842046 offenbart.
Diese als Exzenter-Beschlag ausgebildete Verbindungsanordnung besteht aus einem in eine zylindrische Ausnehmung des einen Möbelteils zu verbringenden, offenen, am äußeren Umfang kreisbogenförmigen Ring, dessen einer Schenkel in Richtung der offenen Stelle des Ringes sich in der Stärke zunehmend vermindert, und einem Stift des anderen Möbelteils, der eine zum Einführen des sich verjüngenden Ringteiles bestimmte Öffnung aufweist, wobei der sich verjüngende Ringteil an seinem Außenumfang eine die selbsttätige Rückverdrehung ausschließende Ausbildung aufweist, welche etwa sägezahnartig ausgebildet ist.

Nachteilig bei diesem Exzenter-Beschlag wird gesehen, dass dieser in einem etwa kreisrunden Ausschnitt in der Fläche der Möbelbauplatte angeordnet ist und somit sichtbar ist. Bei einer ebenfalls bekannten Verbindungsanordnung wird ein Bolzen, der mit einer quer verlaufenden Gewindebohrung versehen ist, in ein sogenanntes Sackloch in eine Möbelplatte eingesetzt und mit einem senkrecht dazu verlaufenden, in der zweiten Möbelplatte verankerten Spannbolzen verschraubt. Bei dieser Verbindungsanordnung ist nachteilig, dass in beiden Möbelplatten diese Beschlagsteile sichtbar sind.

Eine weitere Verbindungsanordnung ist beispielsweise in der DE 4426750 beschrieben. Bei dieser Verbindungsanordnung zum Verbinden von vorzugsweise auf Gehrung geschnittenen Möbelbauplatten werden zunächst die Gehrungsflächen in einem Winkel von etwa 45° an den Platten geschnitten und danach Längsnuten mit einem etwa schwalben-schwanzförmigen Querschnitt in diese Gehrungsflächen der miteinander zu verbindenden Platten eingearbeitet.
Die zusammenzufügenden Möbelbauplatten bilden dabei ein Nutenpaar, das von einer gemeinsamen vom Plattenende aus einzuführenden Spannleiste zusammengehalten werden soll. Diese Spannleiste besitzt dabei ein Doppelkeilprofil aus zwei bezüglich der Plattengehrungsflächen zueinander spiegelbildlich divergierendem Keilprofil.
Um eine Verbindung der zusammenzufügenden Platten zu realisieren, sind die Flanken des Schwalbenschwanz-Querschnitts der Längsnuten zeitlich nacheinander und in räumlichem Längsversatz an der Gehrungsfläche der Möbelbauplatte herzustellen.
Im gleichen Arbeitsgang soll auch die Gehrungsfläche der zugehörigen Möbelbauplatte erzeugt werden. Damit soll sich sowohl die Größe des von den beiden Nutflanken eingeschlossenen Spreizwinkels als auch die lichte Weite der Längsnut und die Nuttiefe frei wählen und genau einstellen lassen.

Nachteilig bei dieser Verbindungsanordnung wird gesehen, dass insbesondere das Einbringen der schwalbenschwanzförmigen Längsnut in die auf Gehrung gesägten Möbelbau-platten sehr aufwändig und mit hohen Toleranzschwankungen verbunden ist.

Ein weiterer Nachteil dieser Verbindungsanordnung wird darin gesehen, dass die doppelkeilförmige Spannleiste über die gesamte Länge der zu verbindenden Möbelbauplatten eingebracht werden muss.
Dies ist sowohl zeitaufwändig, insbesondere bei Realisierung einer formschlüssigen Verbindung, aber auch kostenaufwändig, insbesondere bei Realisierung einer stoffschlüssigen Verbindung durch das Verkleben der doppelkeilförmigen Spannleiste in der schwalben-schwanzförmigen Nut.

Ein weiterer Nachteil dieser Verbindungsanordnung besteht darin, dass es durch die Fertigungstoleranzen der schwalbenschwanzförmigen Nut und der doppelkeilförmigen Spannleiste zu einer Spaltbildung zwischen den zu verbindenden Möbelbauplatten kommen kann, welche später nachteiliger Weise nicht mehr korrigierbar ist.

Hier setzt die Erfindung ein, die sich die Aufgabe gestellt hat, die Nachteile der Verbindungsanordnungen aus dem bekannten Stand der Technik zu überwinden und eine Verbindungsanordnung aufzuzeigen, die wirtschaftlich und kostengünstig herstellbar ist, die insbesondere Toleranzschwankungen in der Herstellung der Möbelbauplatten als auch der Verbindungsanordnung ausgleicht und deren Einsatz zum Verbinden von zueinander angeordneten Möbelbauplatten werkzeuglos möglich ist.

Es konnte überraschend festgestellt werden, dass eine Verbindungsanordnung zum Verbinden von wenigstens zwei zueinander angeordneten Möbelbauplatten, insbesondere für Schrank- oder Regalmöbel und dergleichen, umfassend wenigstens eine Rastanordnung sowie wenigstens ein Verbindungsmittel, mit wenigstens einem ersten Rastelement, wobei die Möbelbauplatte wenigstens eine Ausnehmung aufweist, sich dadurch auszeichnet, dass das Verbindungsmittel in wenigstens einer Ausnehmung der Möbelbauplatte angeordnet ist, wenigstens einen Aufnahmeraum, in dem ein erstes Rastelement angeordnet ist, aufweist und dass die Rastanordnung bei miteinander verbundenen Möbelbauplatten mit dem Aufnahmeraum des Verbindungselementes in Wirkverbindung steht. Die erfindungsgemäße Verbindungsanordnung lässt sich somit kostengünstig und wirtschaftlich im beispielsweise Strangpressverfahren herstellen und kann den jeweiligen Anforderungen an die zu wählende Verbindung der zusammenzufügenden Möbelbauplatten sowohl als lösbare und somit kraftschlüssige Verbindung als auch als nicht lösbare und somit formschlüssige Verbindung gerecht werden. Die erfindungsgemäße Verbindungsanordnung erstreckt sich über ein definiertes Maß bzw. eine definierte Länge in Herstellungsrichtung L, welche beispielsweise als Extrusions-Längsrichtung ausgebildet ist. Die erfindungsgemäße Verbindungsanordnung kann somit beispielsweise im an sich bekannten Extrusionsverfahren kostengünstig und wirtschaftlich hergestellt werden. Dem Nutzer bzw. Endverbraucher kann sie dabei entweder als langegestrecktes Profil beispielsweise auf einer Rolle aufgewickelt oder als Profilabschnitte in Einzellängen zur Verfügung gestellt werden.
Ein weiterer Vorteil der erfindungsgemäßen Verbindungsanordnung besteht darin, dass mit einem definierten Maß bzw. einer definierten Länge in Herstellungsrichtung L von etwa 10 mm bis 3.000 mm, bevorzugt 15 mm bis 2.000 mm, besonders bevorzugt 15 mm bis 1.500 mm ausgebildet ist. Dadurch ist die erfindungsgemäße Verbindungsanordnung in entsprechend lange Ausnehmungen von Möbelbauplatten einfach einbringbar.

Bei der Montage von Möbelbauplatten zu Möbeln ist die Verbindungsanordnung bspw. über die gesamte Breite der Möbelbauplatte einbringbar, wobei es aber auch im Rahmen der Erfindung liegt, dass die erfindungsgemäße Verbindungsanordnung in Form einzelner Profilabschnitte mit einem definierten Maß bzw. einer definierten Länge von etwa 10 mm bis 60 mm, bevorzugt 15 mm bis 50 mm von beispielsweise der Rastanordnung und/oder des Verbindungsmittels zur Verfügung gestellt und an den entsprechenden Stellen der Möbelbauplatte in die Ausnehmungen einbringbar ist.
Die erfindungsgemäße Verbindungsanordnung zeichnet sich durch ihre Gestaltung und/oder Geometrie von den bisher im Stand der Technik bekannten, punktuellen Verbindungen über beispielsweise Dübel bzw. Schrauben neu sowie erfolgreich ab und stellt dem Nutzer bzw. Endverbraucher eine kostengünstige sowie einfach zu realisierende Möglichkeit zur Verfügung, Möbelbauplatten so miteinander zu verbinden, dass optisch ansprechende und mechanisch stabile Möbel bzw. Regale herstellbar sind.

Bei der erfindungsgemäßen Verbindungsanordnung wird das Verbindungsmittel in die entsprechende Ausnehmung einer ersten Möbelbauplatte eingebracht, während die Rastanordnung in die Ausnehmung einer weiteren Möbelbauplatte eingebracht ist.

Bei der Herstellung von Schrank- oder Regalmöbeln werden in an sich bekannter Weise mehrere Möbelbauplatten so miteinander verbunden, dass ein so genannter Möbelkorpus entsteht, der Seitenwände, eine Bodenplatte, eine Deckplatte sowie ggf. eine Rückwand aufweist.

Zur Herstellung eines derartigen Möbelkorpus mit der erfindungsgemäßen Verbindungsanordnung werden nun beispielsweise in die Bodenplatte sowie in die Deckplatte in den entsprechenden Ausnehmungen die Verbindungsmittel eingebracht, während in den Stirnseiten der Seitenwände bzw. der Rückwand jeweils eine Rastanordnung in der entsprechenden Ausnehmung eingebracht ist, sodass in die Bodenplatte, die Seitenwände bzw. die Rückwand über die erfindungsgemäße Verbindungsanordnung miteinander verbunden werden können und danach die Deckplatte aufgesetzt und der Möbelkorpusdurch Herstellen der Verbindung mit Hilfe der erfindungsgemäßen Verbindungsanordnung werkzeuglos hergestellt ist.

Der Möbelkorpus lässt sich also vorteilhafterweise durch einfaches Zusammendrücken bzw. Klicken der in den Möbelbauplatten angeordneten erfindungsgemäßen Verbindungsanordnung realisieren. Dies ist vorteilhafterweise werkzeuglos durch gegenseitiges Ineinanderdrücken der einzelnen Möbelbauplatten möglich.

Die erfindungsgemäße Verbindungsanordnung zeichnet sich weiterhin dadurch aus, dass die Rastanordnung kraftschlüssig mit dem Aufnahmeraum des Verbindungsmittels in Wirkverbindung steht. Durch diese vorteilhafte Ausgestaltung ist es möglich, Schrank- oder Regalmöbel und dergleichen zu einem späteren Zeitpunkt einfach zu demontieren, zu anderen Standorten zu transportieren und diese erneut miteinander zu montieren.

Es hat sich weiterhin als vorteilhaft herausgestellt, dass die Rastanordnung formschlüssig mit dem Aufnahmeraum des Verbindungsmittels in Wirkverbindung steht. Hierdurch ist insbesondere bei der Herstellung bzw. Montage von großen und voluminösen Schrank- oder Regalmöbeln eine sichere und stabile Verbindung zwischen den einzelnen Möbelbauplatten realisierbar.

Dabei kann vorteilhafterweise bei der erfindungsgemäßen Verbindungsanordnung das Verbindungsmittel kraftschlüssig und / oder formschlüssigund / oder stoffschlüssig in der Ausnehmung der Möbelbauplatte angeordnet sein. Hierdurch kann eine erfindungsgemäße Verbindungsanordnung zur Verfügung gestellt werden, die in geometrisch einfacher Ausgestaltung wirtschaftlich herstellbar und für alle möglichen Verbindungsarten einsetzbar ist.

Dabei weist die erfindungsgemäße Verbindungsanordnung vorteilhafterweise ein Verbindungsmittel auf, das an seiner dem Aufnahmeraum gegenüberliegenden Außenseite wenigstens ein Rastelmittel aufweist. Durch diese vorteilhafte Ausgestaltung kann das Verbindungsmittel kostengünstig hergestellt und in entsprechende Ausnehmungen von Möbelbauplatten, welche auch fertigungsbedingte Schwankungen aufweisen können, kraftschlüssig und sicher eingebracht werden.
Es liegt jedoch auch im Rahmen der Erfindung, dass das Verbindungsmittel beispielsweise bei der Verwendung unterschiedlicher Werkstoffe der erfindungsgemäßen Verbindungsanordnung in der Ausnehmung der Möbelbauplatten stoffschlüssig, beispielsweise durch Verklebung, angeordnet ist.

Ebenfalls vorteilhaft bei der erfindungsgemäßen Verbindungsanordnung ist, dass der Aufnahmeraum des Verbindungsmittels einander gegenüberliegend angeordnete erste Rastelemente aufweist. Diese können im Querschnitt etwa dreieckförmig, sägezahnförmig, halbrund und dergleichen ausgebildet sein, so dass die in den Aufnahmeraum des Verbindungsmittels einzubringende Rastanordnung formschlüssig fixiert ist.
Dabei liegt es auch im Rahmen der Erfindung, dass der Aufnahmeraum des Verbindungs-mittels wenigstens zwei voneinander beabstandet angeordnete bspw. parallel zueinander angeordnete erste Rastelemente aufweist, so dass die Rastanordnung stufenweise in den Aufnahmeraum des Verbindungsmittels einbringbar und fixierbar ist.

Weiterhin liegt es auch im Rahmen der Erfindung, dass der Aufnahmeraum des Verbindungsmittels wenigstens ein erstes Rastelement aufweist, so dass die Rastanordnung schnell und einfach in den Aufnahmeraum des Verbindungsmittels einbringbar ist.

In einer weiteren vorteilhaften Ausgestaltung der erfindungsgemäßen Verbindungsanordnung ist im Aufnahmeraum des Verbindungsmittels wenigstens ein als Steg ausgebildetes zweites Rastelement angeordnet. Durch diese vorteilhafte Ausgestaltung kann die erfindungsgemäße Verbindungsanordnung insbesondere für verschieden dicke Möbelbauplatten eingesetzt werden, so dass die Rastanordnung in den durch das als Steg ausgebildete zweite Rastelement aufgeteilten Aufnahmeraum des Verbindungsmittels jeweils links bzw. rechts am jeweiligen als Steg ausgebildeten zweiten Rastelement fixierbar ist.

In einer ebenfalls vorteilhaften Ausgestaltung der erfindungsgemäßen Verbindungsanordnung weist die Rastanordnung an seinem dem Rastelement gegenüberliegenden freien Ende wenigstens ein zweites Rastelement auf.
Dieses zweite Rastelement kann so ausgebildet sein, dass es kraftschlüssig und / oder formschlüssig in einer Ausnehmung der Möbelbauplatte fixierbar ist.
Das zweite Rastelement kann weiterhin vorteilhafterweise so ausgebildet sein, dass es analog zum ersten Rastelement in einem in einer Ausnehmung angeordneten Verbindungsmittel kraftschlüssig und / oder formschlüssigeinbringbar ist.
Diese vorteilhafte Ausgestaltung ermöglicht es beispielsweise die schmalen Stirnseiten von einander gegenüberliegend angeordneten Möbelbauplatten einfach und sicher zu verbinden.

Es hat sich weiterhin als vorteilhaft herausgestellt bei der erfindungsgemäßen Verbindungsanordnung, dass die Rastanordnung wenigstens einen orthogonal zu den Rastelementen angeordneten Steg aufweist.
Die Breite des Steges der Rastanordnung ist vorteilhafterweise so dimensioniert, dass diese in etwa der Breite der Ausnehmung der Möbelbauplatte entspricht. Hierdurch ist es möglich, einerseits die Ausnehmung in der Möbelbauplatte abzudecken und andererseits fertigungsbedingte Fehlstellen im Randbereich der Ausnehmung zu kaschieren.

Die erfindungsgemäße Verbindungsanordnung ist vorteilhafterweise weiterhin so ausgebildet, dass die Rastanordnung wenigstens ein Sperrelement aufweist. Dieses ist bspw. etwa parallel beabstandet vom ersten Rastelement angeordnet.
Durch diese vorteilhafte Ausgestaltung der erfindungsgemäßen Verbindungsanordnung ist es insbesondere bei einem Verbindungsmittel, welches im Aufnahmeraum wenigstens ein als Steg ausgebildetes zweites Rastelement aufweist, möglich, die kraftschlüssig und / oder formschlüssige Verbindung zwischen der Rastanordnung und dem Verbindungsmittel gegen Demontage zu sperren.

Dabei hat es sich weiterhin als vorteilhaft herausgestellt, dass das Sperrelement an seinem freien Ende wenigstens ein Sperrmittel aufweist, welches im Querschnitt gesehen etwa rund, oval, prismatisch, mehreckig, dreieckförmig und dergleichen ausgebildet ist. In dieser vorteilhaften Ausgestaltung der erfindungsgemäßen Verbindungsanordnung ist es möglich, die Verbindung zwischen den Möbelbauplatten einfach und werkzeuglos zu realisieren sowie eine beispielsweise gewichtsbedingte Verschiebung der einzelnen verbundenen Möbelbauplatten durch die Dimensionierung des am Sperrelement angeordneten Sperrmittels zu verhindern.

Die erfindungsgemäße Verbindungsanordnung zeichnet sich weiterhin dadurch aus, dass die Rastanordnung und/oder das Verbindungsmittel sich über ein definiertes Maß in Herstellungsrichtung L erstrecken. Die Rastanordnung und / oder das Verbindungsmittel kann dabei als stranggepresstes Profil und/oder Profilabschnitt, das/der sich in einer beispielsweise Extrusions-Längsrichtung erstreckt, ausgebildet sein.
Ein weiterer Vorteil der erfindungsgemäßen Verbindungsanordnung besteht darin, dass die Rastanordnung und/oder das Verbindungsmittel ein definiertes Maß bzw. eine definierte Länge in Herstellungsrichtung L von etwa 10 mm bis 3.000 mm, bevorzugt 15 mm bis 2.000 mm, besonders bevorzugt 15 mm bis 1.500 mm aufweist.

Vorteilhaft bei der erfindungsgemäßen Verbindungsanordnung wird weiter gesehen, dass die Rastanordnung und / oder das Verbindungsmittel aus einem metallischen und / oder polymeren und / oder duromeren und / oder keramischen Werkstoff hergestellt ist. Hierdurch ist einerseits eine einfache und kostengünstige Herstellung der erfindungsgemäßen Verbindungsanordnung beispielsweise im Strangpressverfahren bei metallischen Werkstoffen möglich.
Unter metallischen Werkstoffen werden hier insbesondere verstanden Legierungen, insbesondere Eisenlegierungen wie Stahl, Gusseisen, Edelstahl, sowie Nichteisenmetalle wie Kupfer, Aluminium, Zink. Weiterhin umfasst sind metallische Werkstoffe aus Nichteisenlegierungen wie Messing, Bronze.

Aber auch eine einfache und kostengünstige Herstellung der erfindungsgemäßen Verbindungsanordnung beispielsweise im Extrusionsverfahren mit polymeren Werkstoffen ist möglich. Unter polymeren Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien. Dabei können dem polymeren Werkstoff geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen.

Weiterhin kann durch die Wahl unterschiedlicher Werkstoffkombinationen der Rastanordnung und / oder des Verbindungsmittels sichergestellt werden, dass die erfindungsgemäße Verbindungsanordnung zum Verbinden von zueinander angeordneten Möbelbauplatten einerseits werkzeuglos realisierbar ist und andererseits bei bestimmungsgemäßer Verwendung der Schrank- oder Regalmöbel jederzeit sicher fixiert ist.

Die Erfindung betrifft weiterhin ein Möbelsystem, insbesondere Schrank- oder Regalmöbel, bestehend aus zueinander angeordneten Möbelbauplatten, umfassend wenigstens eine Rastanordnung sowie wenigstens ein Verbindungsmittel, mit wenigstens einem ersten Rastelement, wobei die Möbelbauplatten wenigstens eine Ausnehmung aufweisen, dass sich dadurch auszeichnet, dass die Möbelbauplatten über wenigstens eine erfindungsgemäße Verbindungsanordnung miteinander verbunden sind.

Die Erfindung soll nun an diesen nicht einschränkenden Ausführungsbeispielen nachfolgend beschrieben werden.

Es zeigen:
- Fig. 1: perspektivische Explosionsdarstellung der erfindungsgemäßen Verbindungsanordnung sowie der zu verbindenden Möbelbauplatten
- Fig. 2: perspektivische Darstellung einer erfindungsgemäßen Verbindungsanordnung in zwei Möbelbauplatten
- Fig. 3: perspektivische Darstellung einer weiteren erfindungsgemäßen Verbindungsanordnung in zwei Möbelbauplatten
- Fig. 4: perspektivische Darstellung einer weiteren erfindungsgemäßen Verbindungsanordnung in zwei Möbelbauplatten
- Fig. 5: perspektivische Darstellung einer weiteren erfindungsgemäßen Verbindungsanordnung in zwei Möbelbauplatten
- Fig. 6: perspektivische Darstellung einer weiteren erfindungsgemäßen Verbindungsanordnung.

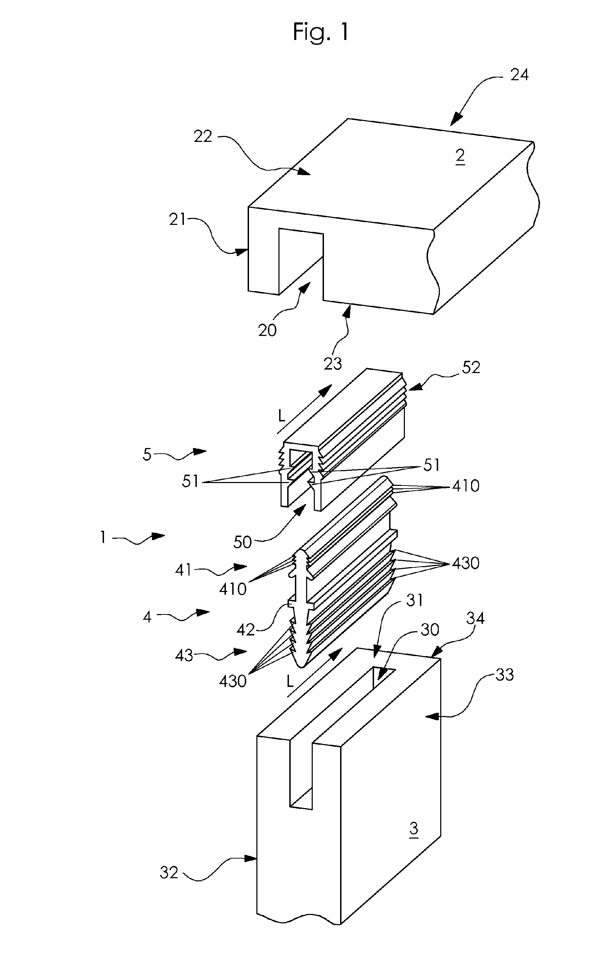

In der Fig. 1 ist eine perspektivische Explosionsdarstellung der erfindungsgemäßen Verbindungsanordnung 1 sowie der zu verbindenden Möbelbauplatten 2, 3 dargestellt.

Die Verbindungsanordnung 1 erstreckt sich über ein definiertes Maß bzw. eine definierte Länge in Herstellungsrichtung L, welche in diesem Ausführungsbeispiel als Extrusions-Längsrichtung ausgebildet ist.
Die erfindungsgemäße Verbindungsanordnung 1 umfasst die Rastanordnung 4 sowie das Verbindungsmittel 5.
Sowohl die Rastanordnung 4 als auch das Verbindungsmittel 5 sind in diesem Ausführungsbeispiel so ausgebildet, dass sie ein definiertes Maß bzw. eine definierte Länge in Herstellungsrichtung L von etwa 10 mm bis 3.000 mm, bevorzugt 15 mm bis 2.000 mm aufweisen und in entsprechend dimensionierte Ausnehmungen 20, 30 von Möbelbauplatten 2, 3 einbringbar sind.

In den Möbelbauplatten 2, 3 ist jeweils eine Ausnehmung 20, 30 eingebracht, die in diesem Ausführungsbeispiel einen unterschiedlichen Abstand von der Stirnseite 21 der Möbelbauplatte 2 sowie von der Deckfläche 32 der Möbelbauplatte 3 aufweisen.

Die Ausnehmung 30 der Möbelbauplatte 3 ist in diesem Ausführungsbeispiel in die Stirnseite 31 eingebracht und erstreckt sich nicht über die gesamte Breite der Stirnseite 31 der Möbelbauplatte 3. In diesem Ausführungsbeispiel ist die Ausnehmung 30 von der Stirnseite 34 der Möbelbauplatte 3 beabstandet angeordnet.
Bei bestimmungsgemäßem Gebrauch stellt die Grundfläche 33 sowie die Stirnseite 34 der Möbelbauplatte 3 jeweils eine Sichtseite eines Schrank- oder Regalmöbels dar.

Die Ausnehmung 20 der Möbelbauplatte 2 ist nicht in der Stirnseite 21, sondern in die Grundfläche 23 der Möbelbauplatte 2 eingebracht. Die Ausnehmung 20 ist ebenfalls nicht über die gesamte Breite der Grundfläche 23 der Möbelbauplatte 2 eingebracht, sondern analog zur Ausnehmung 30 in der Möbelbauplatte 3 von der die Sichtseite bildenden Stirnseite 24 der Möbelbauplatte 2 beabstandet angeordnet.

Bei bestimmungsgemäßem Einsatz der erfindungsgemäßen Verbindungsanordnung 1 werden die Möbelbauplatten 2, 3 so miteinander verbunden, dass die Stirnseiten 24, 34 die Sichtseite eines Schrank- oder Regalmöbels bilden, während die diesen gegenüberliegenden Seiten die Rückseite darstellen und ggf. mit einer nicht dargestellten Rückwand verschlossen werden können.
Durch diese vorteilhafte Ausgestaltung ist eine einfache und optisch ansprechende Montage der zusammenzufügenden Möbelbauplatten 2, 3 möglich.

Das Verbindungsmittel 5, welches in diesem Ausführungsbeispiel in die Ausnehmung 20 der Möbelbauplatte 2 einbringbar ist, weist einen Aufnahmeraum 50 auf, in dem erste Rastelemente 51 angeordnet sind.
Das Verbindungsmittel 5 ist in diesem Ausführungsbeispiel kraftschlüssig in die Ausnehmung 20 der Möbelbauplatte 2 eingebracht, insbesondere durch die an der dem Aufnahmeraum 50 des Verbindungsmittels 5 gegenüberliegenden Außenseite angeordneten Rastmittel 52. Die Rastmittel 52 verkrallen sich in der Ausnehmung 20 der Möbelbauplatte 2 und führen somit zu einer sicheren Fixierung des Verbindungsmittels 5 in der Ausnehmung 20 der Möbelbauplatte 2.
Das Verbindungsmittel 5 der erfindungsgemäßen Verbindungsanordnung 1 ist in diesem Ausführungsbeispiel weiterhin so ausgebildet, dass der Aufnahmeraum 50 des Verbindungsmittels 5 einander gegenüberliegend angeordnete erste Rastelemente 51 aufweist, die eine im Querschnitt etwa dreieckige bzw. sägezahnförmige Geometrie aufweisen.
Das Verbindungsmittel 5 der erfindungsgemäßen Verbindungsanordnung 1 ist weiterhin so ausgebildet, dass der Aufnahmeraum 50 in diesem Ausführungsbeispiel zwei voneinander beabstandet angeordnete erste Rastelemente 51 aufweist, die in etwa parallel zueinander verlaufen.
Durch diese Anordnung der ersten Rastelemente 51 im Aufnahmeraum 50 des Verbindungsmittels 5 ist es somit möglich, dass die Rastanordnung 4, welche in diesem Ausführungsbeispiel bei bestimmungsgemäßer Herstellung der Verbindung der zusammenzufügenden Möbelbauplatten 2, 3 in den Aufnahmeraum 50 des Verbindungsmittels 5 einführbar angeordnet ist, zu einer stufenförmigen Fixierung führt.
Dabei hintergreifen die am ersten Rastelement 41 der Rastanordnung 4 angeordneten etwa dreieckförmigen Rastmittel 410 jeweils formschlüssighinter den ersten Rastelementen 51 des Verbindungsmittels 5.
Hierdurch ist eine insbesondere kraftschlüssige und / oder formschlüssige Wirkverbindung zwischen der Rastanordnung 4 und dem Verbindungsmittel 5 möglich.

Die Rastanordnung 4 ist in diesem Ausführungsbeispiel weiterhin so ausgebildet, dass an seinem dem ersten Rastelement 41 gegenüberliegenden freien Ende wenigstens ein zweites Rastelement 43 angeordnet ist, welches über einen orthogonal zum ersten Rastelementen 41 angeordneten Steg 42 beabstandet ist.
Der Steg 42 der Rastanordnung 4 ist in diesem Ausführungsbeispiel so ausgebildet, dass er die Ausnehmung 30 der Möbelbauplatte 3 etwa überdeckt.

Das zweite Rastelement 43 der Rastanordnung 4 ist in diesem Ausführungsbeispiel so ausgebildet, dass es kraftschlüssig in die Ausnehmung 30 der Möbelbauplatte 3 einbringbar und in dieser fixierbar ist. Das zweite Rastelement 43 der Rastanordnung 4 weist in diesem Ausführungsbeispiel vier im Querschnitt etwa sägezahnförmig ausgebildete Rastmittel 430 auf, welche jeweils einander gegenüberliegend am zweiten Rastelement 43 angeordnet sind.
Es liegt jedoch auch im Rahmen der Erfindung, dass der Querschnitt der Rastmittel 410 des ersten Rastelementes 41 und / oder der Rastmittel 430 des zweiten Rastelementes 43 unterschiedliche Geometrien sowie unterschiedliche Positionen am jeweiligen Rastelement 41, 43 aufweisen.

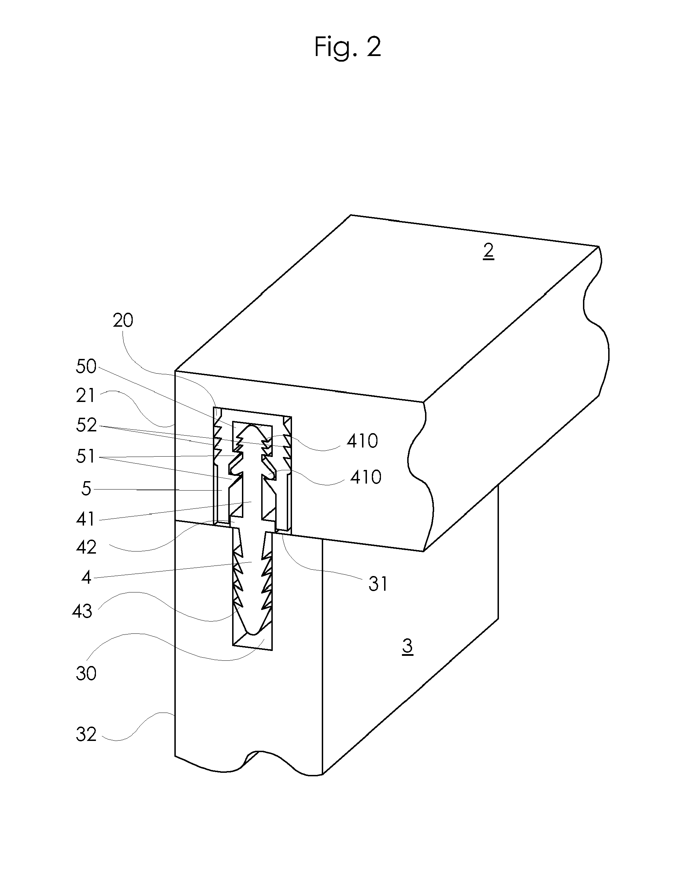

In der Fig. 2 ist eine perspektivische Darstellung von zwei miteinander verbundenen Möbelbauplatten 2, 3 dargestellt. Die Möbelbauplatten 2, 3 sind durch eine erfindungsgemäße Verbindungsanordnung 1 miteinander verbunden, wie sie bereits in der Fig. 1 dargestellt und beschrieben wurde.
Die erfindungsgemäße Verbindungsanordnung 1 zum Verbinden der Möbelbauplatten 2, 3 umfasst eine Rastanordnung 4 sowie ein Verbindungsmittel 5.

Die Möbelbauplatten 2, 3 weisen Ausnehmungen 20, 30 auf, die in diesem Ausführungsbeispiel einen unterschiedlichen Abstand zur Stirnseite 21 der Möbelbauplatte 2 sowie zur Deckfläche 32 der Möbelbauplatte 3 aufweisen.
In der Ausnehmung 20 der Möbelbauplatte 2 ist das Verbindungsmittel 5 der erfindungsgemäßen Verbindungsanordnung 1 formschlüssigangeordnet und weist einen Aufnahmeraum 50 auf, in dem erste Rastelemente 51 angeordnet sind.
Das Verbindungsmittel 5 ist über an seiner dem Aufnahmeraum 50 gegenüberliegenden Außenseite angeordneten Rastelmittel 52 in der Ausnehmung 20 der Möbelbauplatte 2 fixiert.

Die Möbelbauplatte 3 weist eine Ausnehmung 30 auf, die im Querschnitt schmaler ist als die Ausnehmung 20 der Möbelbauplatte 2. In der Ausnehmung 30 der Möbelbauplatte 3 ist die Rastanordnung 4 über ihr zweites Rastelement 43 formschlüssigfixiert.

Das Verbinden der Möbelbauplatten 2, 3 erfolgt dadurch, dass die Möbelbauplatte 2 mit dem in der Ausnehmung 20 angeordneten Verbindungsmittel 5 über dem ersten Rastelement 41 der Rastanordnung 4 der Möbelbauplatte 3 positioniert und durch Druckeinwirkung das erste Rastelement 41 der Rastanordnung 4 in den Aufnahmeraum 50 des Verbindungsmittels 5 eingepresst wird.
Die formschlüssige Verbindung des ersten Rastelementes 41 der Rastanordnung 4 im Aufnahmeraum 50 des Verbindungsmittels 5 erfolgt insbesondere durch die etwa im Querschnitt sägezahnförmig ausgebildeten Rastmittel 410 des ersten Rastelementes 41 an den ebenfalls im Querschnitt sägezahnförmig ausgebildeten ersten Rastelementen 51 des Verbindungsmittels 5.

Somit sind durch die erfindungsgemäße Verbindungsanordnung 1 miteinander zusammenzufügende Möbelbauplatten 2, 3 sehr einfach zu Schrank- oder Regalmöbeln montierbar, ohne zusätzliche Werkzeuge bzw. Klebstoffe.

Dabei kann die erfindungsgemäße Verbindungsanordnung 1 auch so ausgebildet sein, dass insbesondere die Ausnehmungen 20, 30 der Möbelbauplatten 2, 3 nur an der Rückseite im Querschnitt sichtbar sind, während an der Stirnseite 24, 34 der Möbelbauplatte 2, 3 der zu montierenden Schrank- oder Regalmöbel diese nicht erkennbar sind

Die erfindungsgemäße Verbindungsanordnung 1 ist in diesem Ausführungsbeispiel aus einem polymeren Werkstoff kostengünstig hergestellt und als Profil über nahezu die gesamte Breite der zu verbindenden Möbelbauplatten 2, 3 fixiert.

Es liegt jedoch auch im Rahmen der Erfindung, dass die erfindungsgemäße Verbindungsanordnung 1 nur partiell in entsprechende Ausnehmungen 20, 30 der Möbelbauplatte 2, 3 einbringbar bzw. fixierbar ist.
Dabei kann sowohl das Verbindungsmittel 5 und/oder die Rastanordnung 4 partiell und in Längsrichtung voneinander beabstandet in den Ausnehmungen 20, 30 der Möbelbauplatte 2, 3 eingebracht sein.
Es liegt weiterhin im Rahmen der Erfindung, dass je nach Anforderung an die Festigkeit der zu verbindenden Möbelbauplatten 2, 3 bspw. das Verbindungsmittel 5 über die gesamte Breite einer Möbelbauplatte 2, 3 eingebracht ist, während die Rastanordnung 4 nur jeweils partiell voneinander in Längsrichtung beabstandet in einer Ausnehmung 20, 30 der Möbelbauplatte 2, 3 eingebracht ist.
Es liegt aber ebenfalls im Rahmen der Erfindung, dass je nach Anforderung an die Festigkeit der zu verbindenden Möbelbauplatten 2, 3 bspw. die Rastanordnung über die gesamte Breite einer Möbelbauplatte 2, 3 eingebracht ist, während das Verbindungsmittel nur jeweils partiell voneinander in Längsrichtung beabstandet in einer Ausnehmung 20, 30 der Möbelbauplatte 2, 3 eingebracht ist.

Weiterhin ist die erfindungsgemäße Verbindungsanordnung 1 zur Verbindung von allen bisher bekannten Möbelbauplatten 2, 3 einsetzbar.

Im Rahmen der Erfindung wird der Begriff Möbelbauteil, Möbelbauplatte bzw. Holzwerkstoffelement so verstanden, dass das Element aus natürlichem Holz bzw. aus Einzelelementen aus natürlichem Holz oder aus einem aus Holz hergestellten Material besteht. Elemente, die aus aus Holz bestehenden Einzelelementen hergestellt sind, können beispielsweise Tischplatten bzw. Arbeitsplatten oder Möbelkorpen bzw. Regale sein.
Weitere Materialien, die aus Holz hergestellt werden können, sind beispielsweise mitteldichte Faserplatten (MDF), hochdichte Faserplatten (HDF), Hartfaserplatten, Spanplatten und dergleichen.
Weiterhin sind auch sogenannte Leichtbauplatten verwendbar, die aus zwei Decklagen aus Holz und einer dazwischen angeordneten Kernlage bspw. aus Papier bestehen.

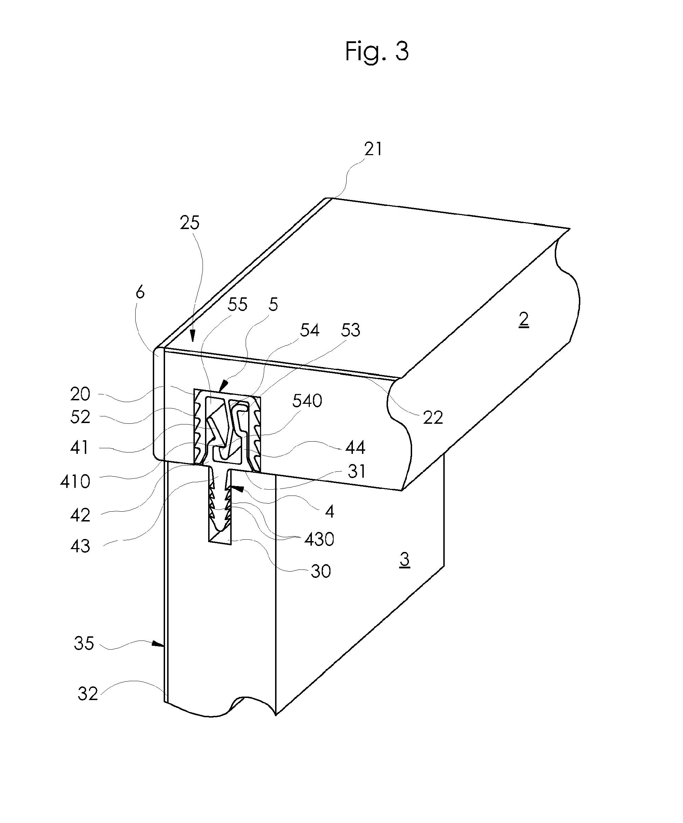

In der Fig. 3 ist eine perspektivische Darstellung einer weiteren erfindungsgemäßen Verbindungsanordnung 1 mit zwei miteinander verbundenen Möbelbauplatten 2, 3 dargestellt. Die Möbelbauplatten 2, 3 sind durch eine erfindungsgemäße Verbindungsanordnung 1 miteinander verbunden.
Die erfindungsgemäße Verbindungsanordnung 1 zum Verbinden der Möbelbauplatten 2, 3 umfasst eine Rastanordnung 4 sowie ein Verbindungsmittel 5.
Die Möbelbauplatten 2, 3 weisen Ausnehmungen 20, 30 auf, die in diesem Ausführungsbeispiel einen unterschiedlichen Abstand zur Stirnseite 21 der Möbelbauplatte 2 sowie zur Deckfläche 32 der Möbelbauplatte 3 aufweisen.

Die Möbelbauplatte 2 weist in diesem Ausführungsbeispiel an ihrer Stirnseite 21 ein zusätzliches Profilelement 6 auf. Dieses Profilelement 6, welches auch als Kantenleiste bzw. Umleimer bezeichnet wird, dient dazu, die Stirnseite 21 der Möbelbauplatte 2 vor Umwelteinflüssen wie eindringende Feuchtigkeit bzw. Schmutz zu schützen.
Die Profilleiste 6 ist durch an sich bekanntes Verkleben bzw. Verschweißen stoffschlüssig mit der Stirnseite 21 der Möbelbauplatte 2 verbunden.

In der Ausnehmung 20 der Möbelbauplatte 2 ist das Verbindungsmittel 5 der erfindungsgemäßen Verbindungsanordnung 1 über in Profillängsrichtung angeordnete Rastelmittel 52 formschlüssig angeordnet.

Das Verbindungsmittel 5 weist einen Aufnahmeraum 50 auf, der durch einen als Steg ausgebildetes zweites Rastelement 54 in zwei etwa gleich große Bereiche 53, 55 unterteilt ist.

Die Rastanordnung 4 ist in diesem Ausführungsbeispiel so ausgebildet, dass sie ein erstes Rastelement 41 sowie ein zweites Rastelement 43 aufweist, die einander gegenüberliegend durch einen Steg 42 voneinander beabstandet angeordnet sind.
Das erste Rastelement 41 ist in diesem Ausführungsbeispiel an einem freien Ende des Steges 42 der Rastanordnung 4 angeordnet.
Die Rastanordnung 4 weist weiterhin ein Sperrelement 44 auf, welches an dem, dem ersten Rastelement 41 gegenüberliegendem freien Ende des Steges 42 der Rastanordnung 4 angeordnet ist.

Das zweite Rastelement 43 der Rastanordnung 4 ist in diesem Ausführungsbeispiel analog zu dem der Fig. 1 bzw. 2 ausgebildet und weist vier im Querschnitt etwa sägezahnförmig ausgebildete Rastmittel 430 auf, welche jeweils einander gegenüberliegend am zweiten Rastelement 43 angeordnet sind. Durch die etwa sägezahnförmig ausgebildeten Rastmittel 430 des zweiten Rastelements 43 ist die Rastanordnung 4 in der Ausnehmung 30 der Möbelbauplatte 3 kraftschlüssig fixiert.

Es liegt jedoch auch im Rahmen der Erfindung, dass die Ausnehmung 30 der Möbelbauplatte 3 mit an sich bekanntem Klebstoff gefüllt ist, so dass die Rastanordnung 4 stoffschlüssig in der Ausnehmung 30 der Möbelbauplatte 3 fixiert ist.

Bei einer Montage der Möbelbauplatten 2, 3 miteinander wird die Möbelbauplatte 3 mit der an ihrer Stirnseite 31 angeordneten Rastanordnung 4 gegenüber der Möbelbauplatte 2 mit dem Verbindungsmittel 5 positioniert.
Die Verbindung der Möbelbauplatten 2, 3 miteinander erfolgt dadurch, dass das Sperrmittel 44 der Rastanordnung 4 in den Bereich 53 des Aufnahmeraumes 50 des Verbindungsmittels 5 eingeführt und dass parallel dazu das erste Rastmittel 41 der Rastanordnung 4 an dem als Rastmittel ausgebildeten Steg 54 vorbeibewegt wird, bis das erste Rastmittel 41 den als Rastmittel ausgebildeten Steg 54 kraftschlüssig hintergreift.

In dieser Position wird die Rastverbindung zwischen dem ersten Rastmittel 41 und dem als Steg ausgebildeten zweiten Rastelement 54 durch das an der Rastanordnung 4 angeordnete Sperrmittel 44 gesperrt bzw. fixiert.

Vorteilhaft bei dieser Ausführungsform der erfindungsgemäßen Verbindungsanordnung 1 wird gesehen, dass über eine kraftschlüssige Rastverbindung zwischen dem ersten Rastmittel 41 der Rastanordnung 4 und dem als Steg ausgebildeten zweiten Rastelement 54 des Verbindungsmittels 5 eine feste und sichere Fixierung der miteinander verbundenen Möbelbauplatten 2, 3 erfolgt.

Ein weiterer Vorteil dieses Ausführungsbeispiels besteht darin, dass beim Verbinden der Möbelbauplatten 2, 3 miteinander es durch diese Geometrie des Verbindungsmittels 5 und der Rastanordnung 4 nicht möglich ist, die Möbelbauplatten 2, 3 falsch miteinander zu fixieren, da das erste Rastmittel 41 sowie das Sperrmittel 44 der Rastanordnung 4 sich nicht in die Bereiche 53, 55 des Aufnahmeraums 50 des Verbindungsmittels 5 einfügen lassen.

In diesem Ausführungsbeispiel sind die Möbelbauplatten 2, 3 weiterhin so ausgebildet, dass sie auf ihrer Deckfläche 22, 32 jeweils ein Dekorelement 25, 35 in Form von bspw. farbigem Papier oder Laminat aufweisen, welches dann die optisch sichtbare und ansprechende Deckfläche 22, 32 der miteinander verbundenen Möbelbauplatten 2, 3 beispielsweise bei der Herstellung von Regalen, Schränken usw. darstellt.

In dieser vorteilhaften Ausgestaltung ist es mit der erfindungsgemäßen Verbindungsanordnung 1 möglich, Möbelbauplatten 2, 3 insbesondere rechtwinklig miteinander so zu verbinden, dass daraus entsprechende Regale, Möbel, Schränke und dergleichen ohne zusätzliche Verbindungselemente aus dem Stand der Technik sowie werkzeuglos hergestellt werden können.

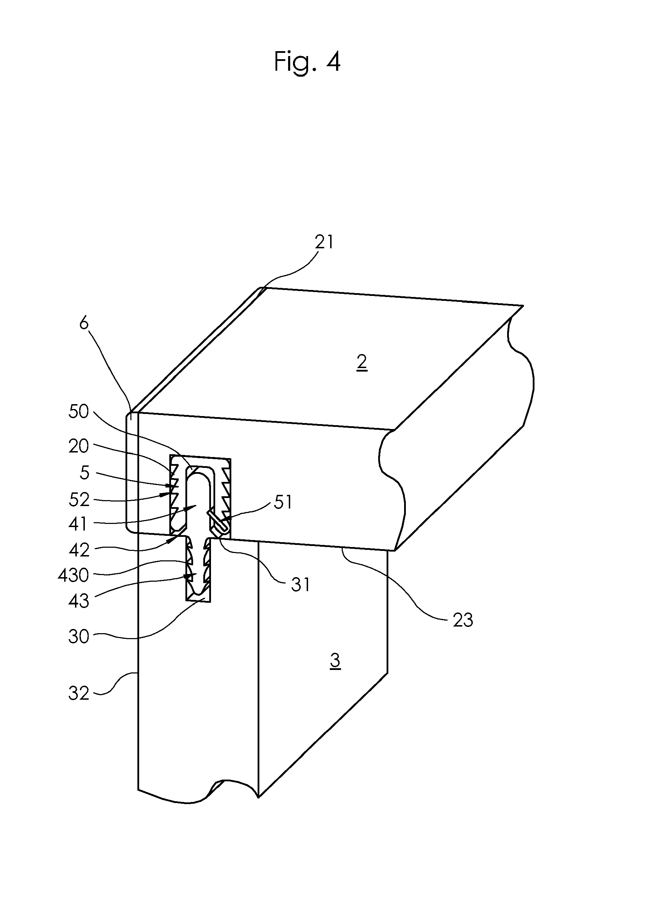

In der Fig. 4 ist eine perspektivische Darstellung einer weiteren erfindungsgemäßen Verbindungsanordnung 1 mit zwei miteinander verbundenen Möbelbauplatten 2, 3 dargestellt. Die Möbelbauplatten 2, 3 sind durch eine erfindungsgemäße Verbindungsanordnung 1 miteinander verbunden.
Die erfindungsgemäße Verbindungsanordnung 1 zum Verbinden der Möbelbauplatten 2, 3 umfasst eine Rastanordnung 4 sowie ein Verbindungsmittel 5.

Die Möbelbauplatten 2, 3 weisen Ausnehmungen 20, 30 auf, die in diesem Ausführungsbeispiel einen unterschiedlichen Abstand zur Stirnseite 21 der Möbelbauplatte 2 sowie zur Deckfläche 32 der Möbelbauplatte 3 aufweisen.

Die Möbelbauplatte 2 weist in diesem Ausführungsbeispiel an ihrer Stirnseite 21 ein zusätzliches Profilelement 6 auf. Dieses Profilelement 6, welches auch als Kantenleiste bzw. Umleimer bezeichnet wird, dient dazu, die Stirnseite 21 der Möbelbauplatte 2 vor Umwelteinflüssen wie eindringende Feuchtigkeit bzw. Schmutz zu schützen.
Die Profilleiste 6 ist durch an sich bekanntes Verkleben bzw. Verschweißen stoffschlüssig mit der Stirnseite 21 der Möbelbauplatte 2 verbunden.

In der Ausnehmung 20 der Möbelbauplatte 2 ist das Verbindungsmittel 5 der erfindungsgemäßen Verbindungsanordnung 1 über in Profillängsrichtung angeordnete Rastelmittel 52 formschlüssigangeordnet.
Das Verbindungsmittel 5 weist einen Aufnahmeraum 50 auf, in dem in diesem Ausführungsbeispiel ein als Fixierelement ausgebildetes erstes Rastelement 51 angeordnet ist. Das als Fixierelement ausgebildete erste Rastelement 51 ist in der Wandung des Verbindungsmittels 5 in Profillängsrichtung stoffschlüssig angeordnet, in diesem Ausführungsbeispiel aus einem metallischen Werkstoff hergestellt und im Querschnitt etwa prismatisch ausgebildet.
In diesem Ausführungsbeispiel ist nur ein als Fixierelement ausgebildetes erstes Rastelement 51 in dem Verbindungsmittel 5 positioniert.
Es liegt jedoch auch im Rahmen der Erfindung, dass mehrere nebeneinander bzw. gegenüberliegend angeordnete als Fixierelemente ausgebildete erste Rastelemente 51 im Aufnahmeraum 50 des Verbindungsmittels 5 angeordnet sind.
Es liegt weiterhin im Rahmen der Erfindung, dass an der Rastanordnung 4, insbesondere das erste Rastelement 41 als Fixierelement ausgebildet sein kann.

Bei der Montage der Möbelplatten 2, 3 miteinander wird die Möbelbauplatte 3 mit der an ihrer Stirnseite 31 angeordneten Rastanordnung 4 gegenüber dem Verbindungsmittel 5 der Möbelbauplatte 2 positioniert.
Die Verbindung der Möbelbauplatten 2, 3 miteinander erfolgt dadurch, dass das erste Rastelement 41 der Rastanordnung 4 in den Aufnahmeraum 50 des Verbindungsmittels 5 hinein bewegt wird, bis der Steg 42 der Rastanordnung 4 an den freien Enden des Verbindungsmittels 5 angeordnet und die Stirnseite 31 der Möbelbauplatte 3 an der Grundfläche 23 der Möbelbauplatte 2 angeordnet ist.

Im Rahmen der Bewegung des ersten Rastelements 41 der Rastanordnung 4 in den Aufnahmeraum 50 des Verbindungsmittels 5 wird das als Fixierelement ausgebildete erste Rastelement 51 gegen die Wandung des Verbindungsmittels 5 bewegt und nach Abschluss der Verbindung ist das als Fixierelement ausgebildete erste Rastelement 51 formschlüssig am bzw. im ersten Rastelement 41 der Rastanordnung 4 angeordnet.

Das erste Rastelement 41 der Rastanordnung 4 ist in diesem Ausführungsbeispiel so ausgebildet, dass es keine Rastmittel 410, wie in den Figuren 1 bis 3 dargestellt, aufweist.
Es liegt jedoch auch im Rahmen der Erfindung, dass das erste Rastelement 41 der Rastanordnung 4 Rastmittel 410 aufweist, die so ausgebildet sind, dass sie durch das als Fixierelement ausgebildete erste Rastelement 51 kraft- bzw. formschlüssig hintergriffen sind und somit eine sichere Verbindung der Möbelbauplatten 2, 3 erlauben.

Die Rastanordnung 4 ist in diesem Ausführungsbeispiel so ausgebildet, dass sie ein erstes Rastelement 41 sowie ein zweites Rastelement 43 aufweist, die einander gegenüberliegend durch einen Steg 42 voneinander beabstandet angeordnet sind. Das erste Rastelement 41 ist in diesem Ausführungsbeispiel an einem freien Ende des Steges 42 der Rastanordnung 4 angeordnet.
Das zweite Rastelement 43 der Rastanordnung 4 ist in diesem Ausführungsbeispiel so ausgebildet, das es drei im Querschnitt etwa sägezahnförmig ausgebildete Rastmittel 430 aufweist, welche jeweils einander gegenüberliegend am zweiten Rastelement 43 angeordnet sind. Durch die etwa sägezahnförmig ausgebildeten Rastmittel 430 des zweiten Rastelements 43 ist die Rastanordnung 4 in der Ausnehmung 30 der Möbelbauplatte 3 kraftschlüssig fixiert.

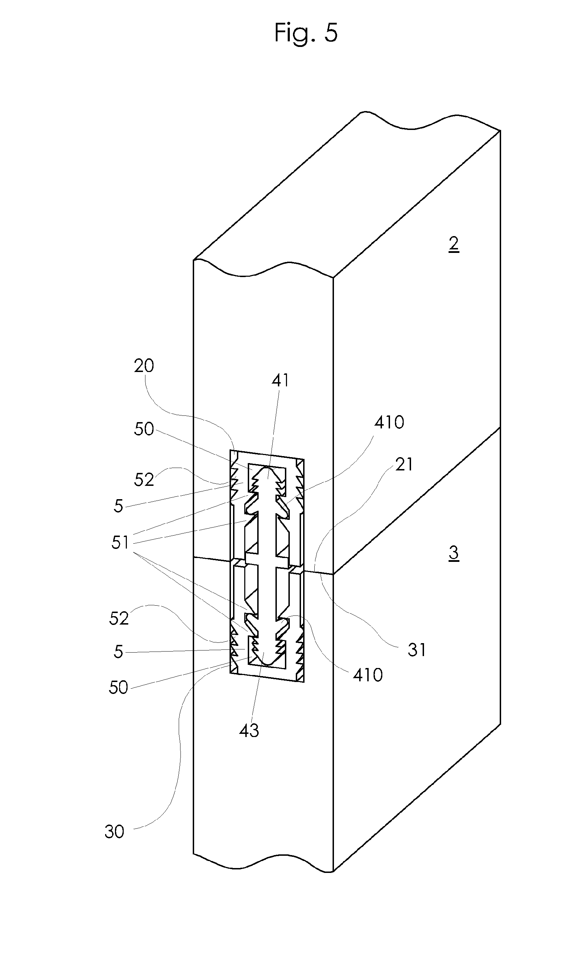

In der Fig. 5 ist eine perspektivische Darstellung einer weiteren erfindungsgemäßen Verbindungsanordnung 1 mit zwei miteinander verbundenen Möbelbauplatten 2, 3 dargestellt. In diesem Ausführungsbeispiel sind im Gegensatz zu den Fig. 1 bis Fig. 4 die beiden Möbelbauplatten 2, 3 nicht rechtwinklig, sondern an den Stirnseiten 21, 31 über die erfindungsgemäße Verbindungsanordnung 1 miteinander verbunden.
Dazu wurden in die Stirnseite 21, 31 der Möbelbauplatte 2, 3 die Ausnehmungen 20, 30 etwa mittig eingebracht.

Die erfindungsgemäße Verbindungsanordnung 1 weist in diesem Ausführungsbeispiel eine Rastanordnung 4 sowie zwei Verbindungsmittel 5 auf.
Die Verbindungsmittel 5 sind in ihrem Querschnitt gleichartig ausgebildet und in der jeweiligen Ausnehmung 20, 30 der Möbelbauplatte 2, 3 formschlüssig eingepresst.
Hierzu dienen die an der Außenseite des Verbindungsmittels 5 angeordneten Rastmittel 52. Das Verbindungsmittel 5 der erfindungsgemäßen Verbindungsanordnung 1 weist einen Aufnahmeraum 50 auf, in dem erste Rastelemente 51 angeordnet sind.

Die ersten Rastelemente 51 des Verbindungsmittels 5 sind in diesem Ausführungsbeispiel im Querschnitt etwa dreieckförmig ausgebildet und direkt einander gegenüberliegend angeordnet.
Weiterhin sind die ersten Rastelemente 51 des Verbindungsmittels 5 voneinander beabstandet sowie auch etwa parallel zueinander angeordnet.

Die Rastanordnung 4 weist in diesem Ausführungsbeispiel ein erstes Rastelement 41 sowie ein zweites Rastelement 43 auf, welche einander gegenüberliegend durch den Steg 42 voneinander beabstandet angeordnet sind.
Das Rastelement 41, 43 der Rastanordnung 4 weist in diesem Ausführungsbeispiel jeweils zwei einander gegenüberliegend angeordnete Rastmittel 410 auf, welche in Wirkverbindung mit den ersten Rastelementen 51 des Verbindungsmittels 5 treten und so für eine formschlüssige Verbindung der Möbelbauplatten 2, 3 sorgen.

Die Verbindung der Möbelbauplatten 2, 3 erfolgt im Allgemeinen so, dass in die Ausnehmungen 20, 30 das erste Verbindungsmittel 5 jeweils über die gesamte Breite der Stirnseite 21, 31 der Möbelbauplatte 2, 3 eingebracht wird.
In einem weiteren Arbeitsgang wird in ein zweites Verbindungsmittel 5 der Möbelbauplatte 2, 3 die Rastanordnung 4 über beispielsweise das erste Rastelement 41 in den Aufnahmeraum 50 des ersten Verbindungsmittels 5 eingebracht.
Zur endgültigen Verbindung der Möbelbauplatten 2, 3 erfolgt nun das Einbringen des zweiten Rastelementes 43 in das in der Ausnehmung 30 der Möbelbauplatte 3 angeordnete zweite Verbindungsmittel 5.
Hierdurch ist es mit der erfindungsgemäßen Verbindungsanordnung 1 möglich, Möbelbauplatten 2, 3 insbesondere an ihren Stirnseiten 21, 31 einfach und werkzeuglos miteinander zu verbinden bzw. zu fixieren.

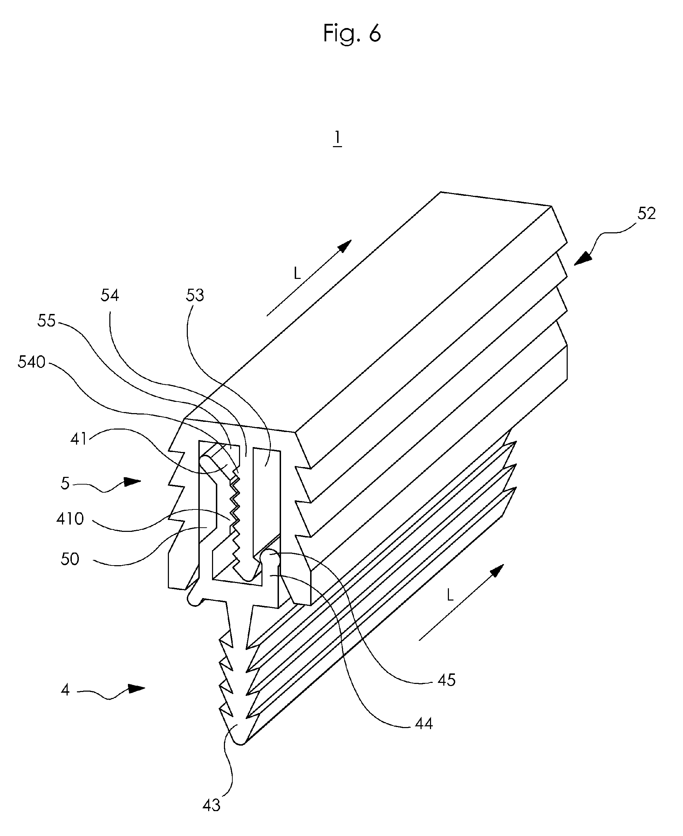

In der Fig. 6 ist eine perspektivische Darstellung einer weiteren erfindungsgemäßen Verbindungsanordnung 1 dargestellt.
Die Verbindungsanordnung 1 erstreckt sich über ein definiertes Maß bzw. eine definierte Länge in Herstellungsrichtung L, welche in diesem Ausführungsbeispiel als Extrusions-Längsrichtung ausgebildet ist.
Die Verbindungsanordnung 1 umfasst eine Rastanordnung 4 sowie ein Verbindungsmittel 5, welche in diesem Ausführungsbeispiel aus dem polymeren Werkstoff Acrylnitril-Butadien-Styrol-Copolymere (ABS) im Extrusionsverfahren hergestellt sind.
Sowohl die Rastanordnung 4 als auch das Verbindungsmittel 5 sind in diesem Ausführungsbeispiel so ausgebildet, dass sie ein definiertes Maß bzw. eine definierte Länge in Herstellungsrichtung L von etwa 10 mm bis 3.000 mm, bevorzugt 15 mm bis 2.000 mm aufweisen und in entsprechend dimensionierte, hier nicht dargestellte Ausnehmungen, von Möbelbauplatten einbringbar sind.

Das Verbindungsmittel 5 weist an seiner Außenseite Rastmittel 52 auf, die dazu dienen, das Verbindungsmittel 5 in einer hier nicht dargestellten Ausnehmung einer Möbelbauplatte einzubringen.
Weiterhin ist das Verbindungsmittel 5 der erfindungsgemäßen Verbindungsanordnung 1 so ausgebildet, dass es im Aufnahmeraum 50 ein als Steg ausgebildetes zweites Rastelement 54 aufweist.
Der Aufnahmeraum 50 des Verbindungsmittels 5 ist in diesem Ausführungsbeispiel durch das als Steg ausgebildete zweite Rastelement 54 in etwa zwei unterschiedlich große Bereiche 53, 55 unterteilt.
Das als Steg ausgebildete zweite Rastelement 54 ist weiterhin so ausgebildet, dass es auf wenigstens einer Seite etwa dreieckförmig ausgebildete in Profillängsrichtung führende Rastnasen 540 aufweist.

Im Aufnahmeraum 50 des Verbindungsmittels 5 ist in diesem Ausführungsbeispiel die Rastanordnung 4 angeordnet.

Die Rastanordnung 4 weist in diesem Ausführungsbeispiel ein erstes Rastelement 41 sowie ein am gegenüberliegenden freien Ende angeordnetes zweites Rastelement 43 auf.
Das erste Rastelement 41 ist so ausgebildet, das es auf seiner zum als Steg ausgebildetem zweiten Rastmittel 54 des Verbindungsmittels 5 weisenden Seite, Rastnasen 410 aufweist, die eine Geometrie aufweisen wie die Rastnasen 540 des als Steg ausgebildetem zweiten Rastmittel 54 des Verbindungsmittels 5.

Die Rastanordnung 4 der erfindungsgemäßen Verbindungsanordnung 1 ist weiterhin so ausgebildet, dass diese etwa parallel beabstandet vom ersten Rastelement 41 ein Sperrelement 44 aufweist. Das Sperrelement 44 weist in diesem Ausführungsbeispiel an seinem freien Ende ein im Querschnitt etwa rund ausgebildetes Sperrmittel 45 auf.

Die erfindungsgemäße Verbindungsanordnung 1 gemäß diesem Ausführungsbeispiel zeichnet sich dadurch aus, dass über erste Rastelemente 41 der Rastanordnung 4 eine kraft- und / oder formschlüssige Verbindung zwischen der Rastanordnung 4 und dem Verbindungsmittel 5 über das kraftschlüssig und / oder formschlüssig an dem als Steg ausgebildeten zweiten Rastelement 54 angeordneten ersten Rastelement 41 realisierbar ist, während gleichzeitig das am Sperrelement 44 angeordnete Sperrmittel 45 dafür sorgt, dass das als Steg ausgebildete zweite Rastelement 54 fixiert und somit die Rastanordnung 4 aus dem Aufnahmeraum 50 des Verbindungsmittels 5 nicht mehr bzw. nicht ohne zusätzliche Werkzeuge entfernbar ist.

Das Sperrelement 44 der Rastanordnung 4 sorgt somit dafür, dass bei bestimmungsgemäßer Verwendung der erfindungsgemäßen Verbindungsanordnung 1 eine kraftschlüssig und / oder formschlüssige Verbindung von miteinander zusammenfügbaren Möbelbauplatten 2, 3 jederzeit einfach und werkzeuglos realisierbar ist, eine Demontage in diesem Ausführungsbeispiel jedoch nur unter Zuhilfenahme von speziellen Werkzeugen möglich ist.

## Patentansprüche

1. Verbindungsanordnung (1) zum Verbinden von wenigstens zwei zueinander angeordneten Möbelbauplatten (2, 3), insbesondere für Schrank- oder Regalmöbel und dergleichen, umfassend wenigstens eine Rastanordnung (4) sowie wenigstens ein Verbindungsmittel (5), mit wenigstens einem ersten Rastelement (41, 51), wobei die Möbelbauplatte (2, 3) wenigstens eine Ausnehmung (20, 30) aufweist, **dadurch gekennzeichnet, dass** das Verbindungsmittel (5) in wenigstens einer Ausnehmung (20, 30) der Möbelbauplatte (2, 3) angeordnet ist, wenigstens einen Aufnahmeraum (50), in dem ein erstes Rastelement (51) angeordnet ist, aufweist und dass die Rastanordnung (4) bei miteinander verbundenen Möbelbauplatten (2, 3) mit dem Aufnahmeraum (50) des Verbindungsmittels (5) in Wirkverbindung steht.

2. Verbindungsanordnung (1) nach Anspruch 1, **dadurch gekennzeichnet, dass** die Rastanordnung (4) kraftschlüssig mit dem Aufnahmeraum (50) des Verbindungsmittels (5) in Wirkverbindung steht.

3. Verbindungsanordnung (1) nach Anspruch 1, **dadurch gekennzeichnet, dass** die Rastanordnung (4) formschlüssig mit dem Aufnahmeraum (50) des Verbindungsmittels (5) in Wirkverbindung steht.

4. Verbindungsanordnung (1) nach einem der vorhergehenden Ansprüche, **dadurch gekennzeichnet, dass** das Verbindungsmittel (5) kraftschlüssig und/oder formschlüssig und/oder stoffschlüssig in der Ausnehmung (20, 30) der Möbelbauplatte (2, 3) angeordnet ist.

5. Verbindungsanordnung (1) nach einem der vorhergehenden Ansprüche, **dadurch gekennzeichnet, dass** das Verbindungsmittel (5) an seiner dem Aufnahmeraum (50) gegenüberliegenden Außenseite wenigstens ein Rastmittel (52) aufweist.

6. Verbindungsanordnung (1) nach einem der vorhergehenden Ansprüche, **dadurch gekennzeichnet, dass** der Aufnahmeraum (50) des Verbindungsmittels (5) einander gegenüberliegend angeordnete erste Rastelemente (51) aufweist.

7. Verbindungsanordnung (1) nach einem der vorhergehenden Ansprüche, **dadurch gekennzeichnet, dass** der Aufnahmeraum (50) des Verbindungsmittels (5) voneinander beabstandet angeordnete erste Rastelemente (51) aufweist.

8. Verbindungsanordnung (1) nach einem der vorhergehenden Ansprüche, **dadurch gekennzeichnet, dass** im Aufnahmeraum (50) des Verbindungsmittels (5) wenigstens ein als Steg ausgebildetes zweites Rastelement (54) angeordnet ist.

9. Verbindungsanordnung (1) nach einem der vorhergehenden Ansprüche, **dadurch gekennzeichnet, dass** die Rastanordnung (4) an seinem dem ersten Rastelement (41) gegenüberliegenden freien Ende wenigstens ein zweites Rastelement (43) aufweist.

10. Verbindungsanordnung (1) nach einem der vorhergehenden Ansprüche, **dadurch gekennzeichnet, dass** die Rastanordnung (4) einen orthogonal zu den Rastelementen (41, 43) angeordneten Steg (42) aufweist.

11. Verbindungsanordnung (1) nach einem der vorhergehenden Ansprüche, **dadurch gekennzeichnet, dass** die Breite des Steges (42) der Rastanordnung (4) in etwa der Breite der Ausnehmung (20, 30) der Möbelbauplatte (2, 3) entspricht.

12. Verbindungsanordnung (1) nach einem der vorhergehenden Ansprüche, **dadurch gekennzeichnet, dass** die Rastanordnung (4) wenigstens ein Sperrelement (44) aufweist.

13. Verbindungsanordnung (1) nach einem der vorhergehenden Ansprüche, **dadurch gekennzeichnet, dass** die Rastanordnung (4) und/oder das Verbindungsmittel (5) sich über ein definiertes Maß in Herstellungsrichtung L erstrecken.

14. Verbindungsanordnung (1) nach einem der vorhergehenden Ansprüche, **dadurch gekennzeichnet, dass** die Rastanordnung (4) und/oder das Verbindungsmittel (5) ein definiertes Maß in Herstellungsrichtung L von etwa 15 mm bis 3.000 mm, bevorzugt 10 mm bis 2.000 mm aufweist.

15. Möbelsystem, insbesondere Schrank- oder Regalmöbel, bestehend aus zueinander angeordneten Möbelbauplatten (2, 3), umfassend wenigstens eine Rastanordnung (4) sowie wenigstens ein Verbindungsmittel (5), mit wenigstens einem ersten Rastelement (41, 51), wobei die Möbelbauplatten (2, 3) wenigstens eine Ausnehmung (20, 30) aufweisen, **dadurch gekennzeichnet, dass** die Möbelbauplatten (2, 3) über wenigstens eine Verbindungsanordnung (1) gemäß einem der Ansprüche 1 bis 14 miteinander verbunden sind.
